## Europäisches Patentamt

## European Patent Office

## Office européen des brevets

(11) Veröffentlichungsnummer: **0 143 210**
**B1**

(12) # EUROPÄISCHE PATENTSCHRIFT

(45) Veröffentlichungstag der Patentschrift:
**10.08.88**

(51) Int. Cl.⁴: **B 63 H 23/06,** F 16 H 3/72

(21) Anmeldenummer: **84110426.8**

(22) Anmeldetag: **01.09.84**

(54) Schiffsgetriebeanordnung.

(30) Priorität: **27.10.83 DE 3338950**

(43) Veröffentlichungstag der Anmeldung:
**05.06.85 Patentblatt 85/23**

(45) Bekanntmachung des Hinweises auf die Patenterteilung:
**10.08.88 Patentblatt 88/32**

(84) Benannte Vertragsstaaten:
**CH FR GB LI NL**

(56) Entgegenhaltungen:
**DE-A-1 802 456**
**DE-A-3 109 871**
**DE-B-2 913 375**
**FR-A-2 508 584**
**GB-A-2 109 488**
**US-A-3 557 743**

(73) Patentinhaber: **RENK AKTIENGESELLSCHAFT,**
**Gögginger Strasse 71 - 83, D-8900 Augsburg (DE)**

(72) Erfinder: **Hirt, Manfred, Dr.- Ing., Lauterlech 39 c,**
**D-8900 Augsburg (DE)**
Erfinder: **John, Eric, Dipl.- Ing.,**
**Schmetterlingsweg 3, D-8900 Augsburg 22 (DE)**

## Beschreibung

## Schiffswendegetriebe

Die Erfindung betrifft ein Schiffswendegetriebe mit zwei hintereinander geschalteten Planetengetrieben zwischen einer Antriebswelle und einer Abtriebswelle im Hauptantriebsstrang, durch welche die Abtriebswelle von der Antriebswelle wahlweise mit gleichsinniger oder gegensinniger Drehrichtung antreibbar ist, indem die Antriebswelle mit den Sonnenrädern von beiden Planetengetrieben verbunden ist, die Abtriebswelle mit dem Hohlrad des einen und mit dem Planetenträger des anderen Planetengetriebes verbunden ist, und der Planetenträger des einen und das Hohlrad des anderen Planetengetriebes als Reaktionselemente durch jeweils eine Bremse festsetzbar sind.

Ein solches Schiffswendegetriebe ist aus Fig. 2 der DE-A-31 09 871 bekannt. Es besteht aus einem Hauptgetriebe und einem Zusatzgetriebe. Das Hauptgetriebe dient zum Antrieb des Schiffspropellers durch einen Hauptmotor bei normaler Fahrt. Unabhängig davon dient das Zusatzgetriebe zum Antrieb des Schiffspropellers durch einen Zusatzmotor bei sehr langsamer Schiffsgeschwindigkeit, insbesondere bei Rangiermanövern. Keines der beiden Getriebe ermöglicht eine Drehzahlregelung, sondern für eine Drehzahlregelung sind zusätzliche Mittel erforderlich. Solche zusätzlichen Mittel können hydrostatische Einheiten sein, wie sie aus der DE-B-29 13 375 bekannt sind. Bei diesem bekannten Schiffsgetriebe erfolgt der Antrieb des Schiffspropellers im Normalbetrieb über eine mechanische Kupplung. Wenn die Drehzahl des Schiffsmotors auf eine Mindestdrehzahl abfällt, erfolgt eine Umschaltung der Kraftübertragung, durch welche die Kraftübertragung nicht mehr über die Schaltkupplung, sondern über zwei Planetengetriebe erfolgt. Diese sind über eine hydrostatische Pumpe und einen hydrostatischen Motor miteinander verbunden, welche die volle Antriebsleistung übertragen müssen und deshalb entsprechend groß ausgebildet sind. Ferner ist aus der DE-B-1 185 883 ein Getriebe für Ackerschlepper bekannt. Durch die Verwendung eines Riementriebes ist dieses Getriebe nicht für die Übertragung der hohen Leistungen von Schiffsantrieben geeignet. Außerdem ist in diesen bekannten Getrieben die Abtriebswelle bei gleichbleibender Drehrichtung der Antriebswelle nicht in beiden Drehrichtungen antreibbar. Ferner ist aus der DE-A-33 05 924 ein Getriebe für Kraftfahrzeuge bekannt, welches als Regelgetriebe eine hydrostatische Motor-Pumpe-Einheit aufweist.

Durch die Erfindung soll die Aufgabe gelöst werden, das Schiffswendegetriebe so auszubilden, daß bei preisgünstigem und kleinem dafür erforderlichen Bauraum die Propellerdrehzahl stufenlos bis auf den Wert Null herunter eingestellt werden kann, und trotzdem das Schiffswendegetriebe bei Normalfahrt verlustfrei arbeitet.

Diese Aufgabe wird gemäß der Erfindung dadurch gelöst, daß eine hydrodynamische Kupplung mit variablem Flüssigkeits-Füllungsgrad in einem Nebenzweig angeordnet ist, über welchen die Antriebswelle mit dem Reaktionselement eines der beiden Planetengetriebe trieblich verbunden ist, von dessen Drehzahl und Drehrichtung die Drehzahl und Drehrichtung der Abtriebswelle abhängig ist.

Durch die Erfindung wird auf einfache und preisgünstige Weise ein Schiffswendegetriebe geschaffen, welches klein ist, bei Normalfahrt verlustfrei arbeitet, und trotzdem ermöglicht, den Propeller mit einer niedrigeren Drehzahl als den Motor anzutreiben und die Propellerdrehzahl stufenlos bis auf den Wert Null herunter einzustellen.

Weiterbildungen der Erfindung sind in den Unteransprüchen enthalten. Mehrere Ausführungsformen der Erfindung sind in den Zeichnungen schematisch dargestellt und werden im folgenden beschrieben. Darin zeigen

Fig. 1　ein Schiffswendegetriebe nach der Erfindung mit einer Vorrichtung zur Regelung niedriger Abtriebsdrehzahlen bei in gleicher Drehrichtung laufenden An- und Abtriebswellen,

Fig. 2　eine weitere Ausführungsform eines Schiffswendegetriebes nach der Erfindung mit einer Vorrichtung zur Regelung niedriger Abtriebsdrehzahlen bei gegenläufigen An- und Abtriebswellen, und

Fig. 3　eine nochmals weitere Ausführungsform eines Schiffswendegetriebes nach der Erfindung mit einer Vorrichtung zur Regelung niedriger Abtriebsdrehzahlen bei Vorwärtsfahrt und bei Rückwärtsfahrt.

In den Zeichnungen enthaltene Pfeile 2 und 4 geben die Richtung des Kraftflusses an. Die übrigen Pfeile geben die Drehrichtung der einzelnen Getriebeteile an, wobei die ausgezogenen Pfeile die Drehrichtung bei Vorwärtsfahrt und gestrichelte Pfeile die Drehrichtung bei Rückwärtsfahrt des Schiffes angeben.

Als Differentialgetriebe sind ein Planetengetriebe 6 für in gleicher Drehrichtung drehende An- und Abtriebswellen und ein Planetengetriebe 8 für gegenläufig drehende Wellen vorgesehen, die koaxial hintereinander angeordnet sind. Das Planetengetriebe 6 für gleichsinnige Drehrichtung enthält ein inneres Sonnenrad 10, einen Planetenträger 12 mit Planetenrädern 14, und ein drehbar angeordnetes Hohlrad 16. Das Planetengetriebe 8 für gegensinnige Drehrichtung enthält ein inneres Sonnenrad 20, einen drehbar angeordneten Planetenträger 22 mit Planetenrädern 24, und ein äußeres Hohlrad 26. Die beiden Sonnenräder 10 und 20 sind drehfest mit einer Antriebswelle 30 verbunden. Der Planetenträger 12 des Planetengetriebes 6 ist sowohl mit dem Hohlrad 26 des Planetengetriebes 8 als auch mit einer Abgangswelle 32 drehfest verbunden. Das Hohlrad 16 des Planetengetriebes 6 kann durch eine Bandbremse 34 stillgesetzt werden. Der Planetenträger 22 des anderen Planetengetriebes 8 kann durch eine weitere Bandbremse 36 stillgesetzt werden. Die Antriebswelle 30, die beiden Planetengetriebe 6 und 8 und die Abtriebswelle 32 bilden zusammen den Hauptantriebszweig, über welchen von einem Motor 38 eine Schiffsschraube 40 angetrieben werden kann.

Ein Nebenzweig enthält eine Flüssigkeitskupplung 50, deren Primärteil 52 auf einer Welle 54 drehfest angeordnet ist. Sie wird von einem auf ihr drehfest angebrachten Zahnrad 56 angetrieben. Dieses steht mit einem weiteren Zahnrad 58 in Eingriff, welches lose auf der Antriebswelle 30 sitzt und über eine mechanische Kupplung 60 mit der Antriebswelle 30 verbunden werden kann. Die mechanische Kupplung 60 ist deshalb erforderlich, damit der Nebenzweig bei hohen Drehzahlen des Hauptantriebsmotors 38 abgekuppelt werden kann. Der Sekundärteil 62 der Flüssigkeitskupplung 50 sitzt drehfest auf einer Sekundärwelle 64, auf welcher ebenfalls drehfest ein Zahnrad 66 angeordnet ist.

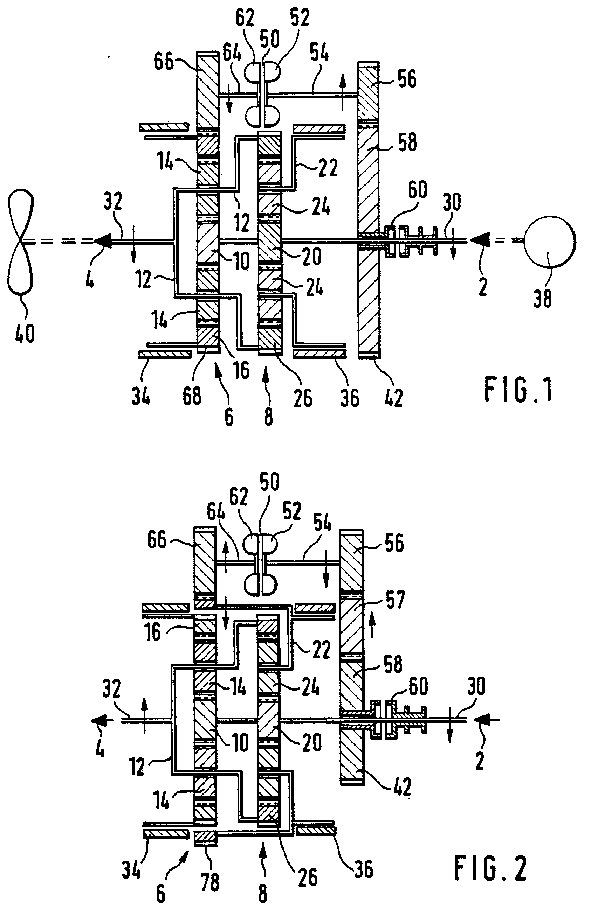

Bei der Ausführungsform nach Fig. 1 ist das Sekundär-Zahnrad 66 in Zahneingriff mit einer Außenverzahnung 68 des Hohlrades 16 des einen Planetengetriebes 6. Dadurch kann bei niedrigen Drehzahlen des Hauptantriebsmotors 38 die mechanische Kupplung 60 geschlossen und damit der Primärteil 52 der Flüssigkeitskupplung 50 angetrieben werden. Die Flüssigkeitskupplung 50 übt je nach Flüssigkeits-Füllungsgrad eine mehr oder weniger starke Bremswirkung über das Sekundärrad 66 auf das Hohlrad 16 aus. Dadurch kann die Drehzahl der Abtriebswelle 32 stufenlos bei niedrigen Drehzahlen bis zu dem Drehzahlwert Null geregelt werden.

Bei der Ausführungsform nach Fig. 2 ist das Sekundär-Zahnrad 66 nicht mit dem einen Planetengetriebe 6, sondern mit einer Außenverzahnung 78 des Planetenträgers 22 des anderen Planetengetriebes 8 in Eingriff. Dadurch kann bei der Ausführungsform nach Fig. 2 die Drehzahl der Abtriebswelle 32 des Schiffes bei gegenläufigen Antriebs- und Abtriebswellen 30 und 33 stufenlos bis auf den Drehzahlwert Null geregelt werden. Ein Drehrichtungsumkehr-Zahnrad 57 sitzt zwischen Zahnrädern 56 und 58.

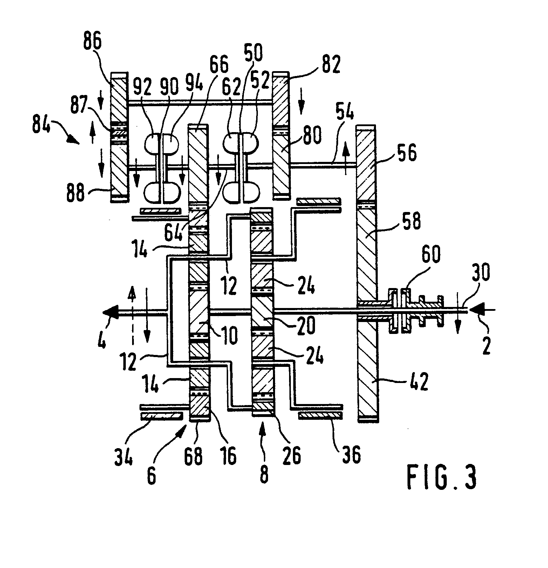

Bei der Ausführungsform nach Fig. 3 sitzt auf der Primärwelle 54 der Flüssigkeitskupplung 50 ein zusätzliches Zahnrad 80, welches über ein Zahnrad 82 ein Drehrichtungsumkehrgetriebe 84 mit den Zahnrädern 86, 87 und 88 antreibt. Von einer weiteren Flüssigkeitskupplung 90 ist der Primärteil 92 mit dem letzten Zahnrad 88 des Drehrichtungsumkehrgetriebes 84 verbunden und der Sekundärteil 94 ist mit dem Sekundärzahnrad 66 des Sekundärteils 62 der einen Flüssigkeitskupplung 50 verbunden. Das Sekundärrad 66 ist mit der Außenverzahnung 68 des Hohlrades 16 des einen Planetengetriebes 6 in Eingriff. Bei Füllung der einen Flüssigkeitskupplung 50 und Minimumdrehzahl des Motors kann die Abtriebswelle 32 je nach Füllungsgrad dieser einen Flüssigkeitskupplung 50, während die andere Flüssigkeitskupplung entleert ist, bis auf die Drehzahl Null geregelt werden, wobei sich Antriebswelle 30 und Abtriebswelle 32 in gleicher Drehrichtung drehen. Beim Füllen der anderen Flüssigkeitskupplung 90, während die eine Flüssigkeitskupplung 50 entleert wird, wird bei gleichbleibender Drehrichtung des Motors und der Antriebswelle 30 die Drehrichtung der Abtriebswelle 32 umgekehrt und ihre Drehzahl kann bei umgekehrter Drehrichtung ausgehend von der Drehzahl Null durch Einstellen des Füllungsgrades der weiteren Flüssigkeitskupplung 90 verändert werden. Beide Flüssigkeitskupplungen 50 und 90 können kleine Baueinheiten sein, da sie nur eine Steuerfunktion haben, jedoch nicht die Schiffsantriebsleistung vom Hauptantriebsmotor 38 zum Propeller 40 übertragen müssen.

## Patentansprüche

1. Schiffswendegetriebe mit zwei hintereinander geschalteten Planetengetrieben (6, 8) zwischen einer Antriebswelle (30) und einer Abtriebswelle (32) im Hauptantriebsstrang, durch welche die Abtriebswelle (32) von der Antriebswelle (30) wahlweise mit gleichsinniger oder gegensinniger Drehrichtung antreibbar ist, indem die Antriebswelle (30) mit den Sonnenrädern (10, 20) von beiden Planetengetrieben verbunden ist, die Abtriebswelle (32) mit dem Hohlrad (26) des einen (8) und dem Planetenträger (12) des anderen Planetengetriebes (6) verbunden ist, und der Planetenträger (22) des einen (8) und das Hohlrad (16) des anderen Planetengetriebes (6) als Reaktionselemente durch jeweils eine Bremse (34, 36) festsetzbar sind, **dadurch gekennzeichnet,** daß eine hydrodynamische Kupplung (50) mit variablem Flüssigkeits-Füllungsgrad in einem Nebenzweig angeordnet ist, über welchen die Antriebswelle (30) mit dem Reaktionselement (16; 22) eines der beiden Planetengetriebe (6, 8) trieblich verbindbar ist, von dessen Drehzahl und Drehrichtung die Drehzahl und Drehrichtung der Abtriebswelle (32) abhängig ist.

2. Schiffswendegetriebe nach Anspruch 1, **dadurch gekennzeichnet,** daß ein Parallelzweig (82-94) vorgesehen ist, der die hydrodynamische Kupplung (50) des Nebenzweiges überbrückt und eine weitere hydrodynamische Kupplung (90) mit variablem Flüssigkeits-Füllungsgrad sowie ein Drehrichtungsumkehrgetriebe (84) enthält, durch welches das Reaktionselement (16) der Planetengetriebe (6, 8) durch wahlweises Füllen der einen oder anderen Kupplung wahlweise in der einen oder der anderen Drehrichtung antreibbar ist (Fig. 3).

3. Schiffswendegetriebe nach Anspruch 1 oder 2,

dadurch gekennzeichnet,

daß der Nebenzweig (50-66) eine mechanische Kupplung (60) aufweist, mit welcher er wahlweise von der Antriebswelle (30) abkuppelbar ist.

**Claims**

1. Ship's gear-change system comprising two planetary gear assemblies (6, 8), connected in tandem between a driving shaft (30) and a driven shaft (32) in the main drive line, whereby the driven shaft (32) can be driven from the driving shaft (30) selectively in the same sense of rotation or in the opposite sense of rotation, wherein the driving shaft (30) is connected to the sun-gears (10, 20) of the two planetary gear assemblies, the driven shaft (32) is connected to the ring gear (26) of the one planetary gear assembly (8) and to the planetary carrier (12) of the other planetary gear assembly (6), and wherein the planetary carrier (22) of said one planetary gear assembly (8) and the ring gear (16) of said other planetary gear assembly (6) can constitute reaction elements by the application of respective brakes (34, 36), characterised in that a hydrodynamic coupling (50) having a variable degree of admission of liquid is arranged in a branch line and by means of which the driving shaft (30) can be drivingly connected to the reaction element (16; 22) of one of the two planetary gear assemblies (6, 8), on whose speed of rotation and direction of rotation the speed of rotation and direction of rotation of the driven shaft (32) is dependent.

2. Ship's gear-change system according to claim 1, characterised in that a parallel branch (82-94) is provided which bypasses the hydrodynamic coupling (50) of the said branch line and which includes a further hydrodynamic coupling (90) with a variable degree of admission of liquid as well as a gear system (84) for reversal of the direction of rotation, by means of which parallel branch the reaction element (16) of the planetary gear assembly (6, 8) can be driven selectively in the one or in the other direction of rotation by selective filling of the one or of the further coupling (Fig. 3).

3. Ship's gear-change system according to claim 1 or 2, characterised in that the branch line (50-66) includes a mechanical coupling (60) by means of which the branch line can be selectively disengaged from the driving shaft (30).

**Revendications**

1. Boîte de vitesses réversible pour bateaux comprenant deux trains planétaires (6, 8) montés l'un derrière l'autre entre un arbre moteur (30) et un arbre de sortie (32) dans la voie principale d'entraînement, au moyen desquels l'arbre de sortie (32) peut être entraîné par l'arbre moteur (30) dans le même sens de rotation ou dans le sens de rotation inverse, à volonté, l'arbre moteur (30) étant relié aux planétaires (10, 20) des deux trains planétaires, l'arbre de sortie (32) étant relié à la couronne (26) de l'un (8) des trains planétaires et au porte-satellites (12) de l'autre (6), et le porte-satellites (22) de l'un des trains planétaires (8) et la couronne (16) de l'autre (6) pouvant être bloqués chacun au moyen d'un frein (34, 36) pour servir d'éléments de réaction, caractérisée par le fait qu'un accouplement hydrodynamique (50) à taux de remplissage en liquide variable est monté dans une branche secondaire par l'intermédiaire de laquelle l'arbre moteur (30) est relié positivement à l'élément de réaction (16 ; 22) de l'un des deux trains planétaires (6, 8) dont la vitesse et le sens de rotation dépendent de la vitesse et du sens de rotation de l'arbre de sortie (32).

2. Boîte de vitesses réversible pour bateaux selon la revendication 1, caractérisée par le fait qu'il est prévu une branche parallèle (82-94) qui ponte l'accouplement hydrodynamique (50) de la branche secondaire et qui comporte un autre accouplement hydrodynamique (90) à taux de remplissage en liquide variable, ainsi qu'un train d'inversion du sens de rotation (84) grâce auquel l'élément de réaction (16) du train planétaire (6, 8) peut être entraîné au choix dans un sens de rotation ou dans l'autre en remplissant au choix l'un ou l'autre des accouplements (figure 3).

3. Boîte de vitesses réversible pour bateaux selon la revendication 1 ou 2, caractérisée par le fait que la branche secondaire (50-66) comporte un accouplement mécanique (60) grâce auquel il peut être désaccouplé à volonté de l'arbre moteur (30).

FIG.1

FIG.2

FIG. 3